**Europäisches Patentamt**

**European Patent Office**

**Office européen des brevets**

(19)

(11) Veröffentlichungsnummer : **0 372 196 B1**

(12) **EUROPÄISCHE PATENTSCHRIFT**

(45) Veröffentlichungstag der Patentschrift :
**26.02.92 Patentblatt 92/09**

(21) Anmeldenummer : **89118746.0**

(22) Anmeldetag : **09.10.89**

(51) Int. Cl.⁵ : **F16B 13/06, B25B 21/00**

(54) Befestigungssystem.

(30) Priorität : **05.12.88 DE 3840914**

(43) Veröffentlichungstag der Anmeldung :
**13.06.90 Patentblatt 90/24**

(45) Bekanntmachung des Hinweises auf die
Patenterteilung :
**26.02.92 Patentblatt 92/09**

(84) Benannte Vertragsstaaten :
**AT BE CH DE ES FR GB IT LI NL**

(56) Entgegenhaltungen :
**DE-A- 2 221 267**
**DE-A- 2 935 964**

(73) Patentinhaber : **fischerwerke Artur Fischer**
**GmbH & Co. KG**
**Weinhalde 14 - 18**
**W-7244 Waldachtal 3/Tumlingen (DE)**

(72) Erfinder : **Mayer, Burkhard**
**Altdorfer Strasse 37**
**W-7038 Holzgerlingen (DE)**
Erfinder : **Heizmann, Hans Peter**
**Frühlingsstrasse 10**
**W-7298 Lossburg 1 (DE)**

(74) Vertreter : **Ott, Elmar, Dipl.-Ing.**
**fischerwerke Artur Fischer GmbH & Co KG**
**Weinhalde 14-18**
**W-7244 Waldachtal 3/Tumlingen (DE)**

Jouve, 18, rue Saint-Denis, 75001 PARIS

## Beschreibung

Die Erfindung betrifft ein Befestigungssystem gemäß der Gattung des Anspruchs 1 (DE-A-2935964).

Es sind Spreizdübel aus Metall bekannt, die aus einem Gewindebolzen mit Konus und einer Spreizhülse bestehen. Der Gewindebolzen ist durch die Spreizhülse geführt und ragt an dem Ende, welches dem Spreizkonus abgewandt ist, aus der Spreizhülse heraus. Durch Zug am Gewindebolzen kann der Spreizkonus in die teilweise geschlitzte Spreizhülse eindringen und diese konisch aufspreizen. In Bohrlöchern mit konischer Hinterschneidung kann eine formschlüssige Verbindung zwischen Spreizdübel und Mauerwerk erzielt werden, dadurch daß der aufspreizbare Teil der Spreizhülse in die Hinterschneidung eingreift.

Beim Einziehen des Spreizkonus muß die Spreizhülse fixiert werden, damit sie nicht aus dem Bohrloch herausgezogen wird. Außerdem muß sichergestellt werden, daß der ausspreizbare Bereich der Spreizhülse exakt in der Bohrlochtiefe positioniert ist, wo sich die Hinterschneidung des Bohrlochs befindet. Dies ist insbesondere dann problematisch, wenn die Hinterschneidung sich nicht am Bohrlochgrund, sondern in deutlichem aber nicht definierten Abstand vom Bohrlochgrund befindet.

Der Erfindung liegt die Aufgabe zugrunde, ein Befestigungssystem mit einer Montage-vorrichtung und einem Spreizdübel zu schaffen, welches eine exakte Montage eines Spreizdübels in einem hinterschnittenen Bohrloch erlaubt, wobei die Hinterschneidung in einem unbestimmten Abstand vom Bohrlochgrund angeordnet sein kann.

Die Lösung dieser Aufgabe wird durch die im Anspruch 1 angegebenen Merkmale erhalten. Ein Verdrehsicherungselement, welches mit einem Schrauber oder dergleichen starr verbunden sein kann, greift an der Spreizhülse des Spreizdübels an und sichert diese gegen axiale Verschiebung und gegen Verdrehen. Vorzugsweise werden zu diesem Zweck gegenüberliegende, parallel verlaufende Nuten an dem aus dem Bohrloch herausragenden Ende der Spreizhülse vorgesehen, in die das Verdrehsicherungselement formschlüssig eingreift. Ein Mitnehmer, der in das Spannfutter des Schraubers eingesetzt ist, besitzt ein Innengewinde, welches auf das freie Ende des Gewindebolzens aufgeschraubt ist. Besonders wichtig ist dabei, daß zwischen Gewindebolzen und Spreizhülse ein elastisches Element eingesetzt ist, welches den Gewindebolzen mit der Spreizhülse verspannt bzw. zwischen diesen beiden Teilen des Spreizdübels eine hohe Reibung erzeugt. Durch diese Maßnahme ist es möglich, daß sich der Gewindebolzen nicht mit dem Mitnehmer mitdreht, sondern sich durch Drehen des Mitnehmers in diesen einschraubt. Da der Mitnehmer ebenso wie die Spreizhülse axial nicht verschiebbar sind, wird durch Drehen des Mitnehmers der Spreizkörper in die Spreizhülse eingezogen, so daß diese aufspreizt und in die Hinterschneidung des Bohrlochs eingreift.

Das Verdrehsicherungselement kann auch an der Stirnseite der Spreizhülse formschlüssig oder mit hoher Reibungskraft angreifen, so daß die Spreizhülse gegen Verdrehen gesichert ist. Diese Ausführung des Verdrehsicherungselementes ist dann erforderlich, wenn die Spreizhülse nicht aus dem Bohrloch herausragen darf. In diesem Fall wird das Verdrehsicherungselement zwischen Mitnehmer und Spreizhülse eingespannt.

Das Verdrehsicherungselement ist vorzugsweise über einen Haltestab mit dem Schraubergehäuse verbunden, wobei der Haltestab in eine Spannvorrichtung eingreift. Wird als Schrauber ein Bohrschrauber oder eine Bohrmaschine verwendet, so kann der Haltestab in die ohnehin vorgesehene Aufnahme für den Tiefenanschlag eingesetzt werden.

Zur Demontage eines in ein Bohrloch eingesetzten Spreizdübels kann das Befestigungssystem mit einer Demontagevorrichtung ausgerüstet werden, die am aus dem Bohrloch herausragenden Teil der Spreizhülse angreift und die Spreizhülse mit einliegendem Gewindebolzen aus dem Bohrloch herauszieht. Selbstverständlich muß zuvor der Gewindebolzen etwas in das Bohrjoch eingeschlagen werden, wobei sich der an seinem anderen Ende befindliche Spreizkörper aus dem Spreizbereich der Spreizhülse entfernt. Wird nun die Spreizhülse mit entsprechend hoher Zugkraft nach außen gezogen, so können die aufgespreizten Teile der Spreizhülse nach innen wieder gerade gedrückt werden. Dabei ist auch das zwischen Gewindebolzen und Spreizhülse wirksame elastische Element sehr vorteilhaft, da dieses ein vollständiges Herausrutschen des Gewindebolzens aus der Spreizhülse sicher verhindert. In einem sehr tiefen Bohrloch könnte ohne dieses elastische Element der Gewindebolzen bei der Demontage vollständig in das Bohrloch hineinfallen, so daß danach kein neuer Spreizdübel in das Bohrloch eingesetzt werden könnte.

Das erfindungsgemäße Befestigungssystem hat den Vorteil, daß zu Kontrollzwecken die in Bohrlöcher eines Mauerwerks eingesetzten Spreizdübel auch problemlos aus dem Bohrloch herausgezogen werden können.

Die Erfindung wird nachfolgend anhand der Zeichnung näher erläutert.

Es zeigen:

Figur 1 das Befestigungssystem mit einem Spreizdübel, dessen Spreizhülse geringfügig aus dem Bohrloch eines Mauerwerks herausragt,

Figur 2 das Befestigungssystem mit einem Spreizdübel, dessen Spreizhülse vollständig in das Bohrloch

2

eingesetzt ist,

Figur 3 die stirnseitige Ansicht des Verdrehsicherungselementes gemäß Figur 1,

Figur 4 die stirnseitige Ansicht des Verdrehsicherungselementes gemäß Figur 2 und

Figur 5 eine Demontagevorrichtung.

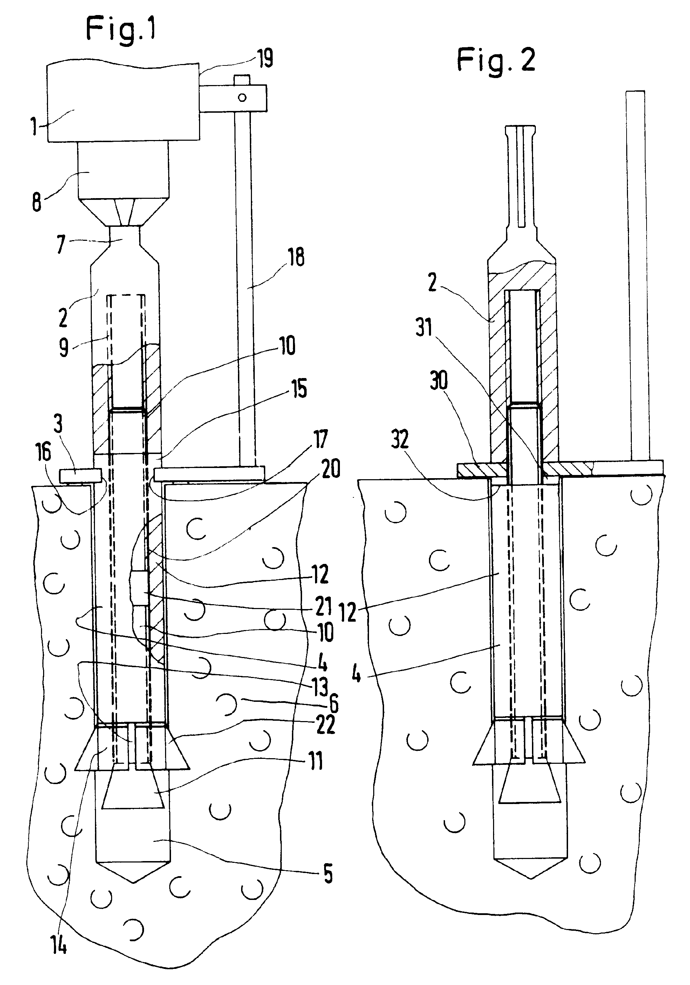

Das in Figur 1 dargestellte Befestigungssystem besteht aus einem Schrauber 1, einem Mitnehmer 2, einem Verdrehsicherungselement 3 und einem Spreizdübel 4, der in ein Bohrloch 5 eines Mauerwerks 6 eingesetzt ist.

Der Mitnehmer 2 ist mit einem Schaft 7 in ein Spannfutter 8 des nicht vollständig dargestellten Schraubers 1 eingespannt. In ein Innengewinde 9 des Mitnehmers 2 greift der Gewindebolzen 10 des Spreizdübels 4 ein, an dessen unterem Ende sich ein Spreizkonus 11 befindet. Der Gewindebolzen 10 mit angeformtem Spreizkonus 11 wird von einer Spreizhülse 12 umschlossen, die einen mit Längsschlitzen 13 versehenen Spreizbereich 14 hat. An dem aus dem Bohrloch 5 herausragenden Ende 15 besitzt die Spreizhülse 12 gegenüberliegende, parallel zueinander verlaufende Nuten 16, 17, in die das Verdrehsicherungselement 3 eingreift. Das Verdrehsicherungselement 3 ist über einen Haltestab 18 am Schraubergehäuse 19 befestigt.

Die Spreizhülse 12 besitzt eine Durchgangsbohrung 20, in der der Gewindebolzen 10 verläuft. Auf dem Gewinde des Gewindebolzens 10 ist ein elastisches Element 21 aufgebracht, welches den Gewindebolzen 10 mit der Spreizhülse 12 verspannt. Das Element 21 ist hier ein Gummiring, der den Gewindebolzen 10 gegenüber der Spreizhülse 12 gegen Verdrehen sichert. Wird der Mitnehmer 2 in Drehung versetzt, so hat dies zur Folge, daß sich der Gewindebolzen 10 in das Gewinde 9 nach oben einschraubt, wodurch der Spreizkonus 11 in die Spreizhülse 12 eingezogen wird und diese im Bereich 14 aufspreizt. Der Spreizbereich 14 greift dabei in eine konische Hinterschneidung 22 des Bohrlochs 5 ein.

In Figur 2 ist das Befestigungssystem mit einem Verdrehsicherungselement 30 dargestellt, welches stirnseitig an der Spreizhülse 12 des Spreizdübels 4 angreift. Zu diesem Zweck besitzt das Verdrehsicherungselement 30 einen ringförmigen Vorsprung 31, dessen Stirnseite 32 gerändelt ist. Der übrige Aufbau dieses Befestigungssystems entspricht dem von Figur 1.

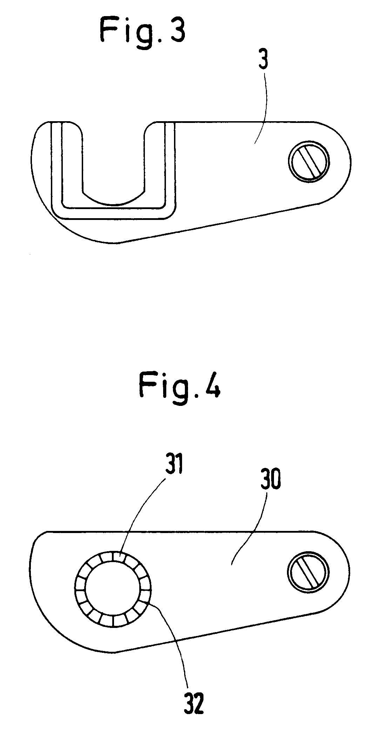

In Figur 3 und Figur 4 sind die Verdrehsicherungselemente 3 und 30 von ihrer der Wandoberfläche zugewandten Seite gezeigt.

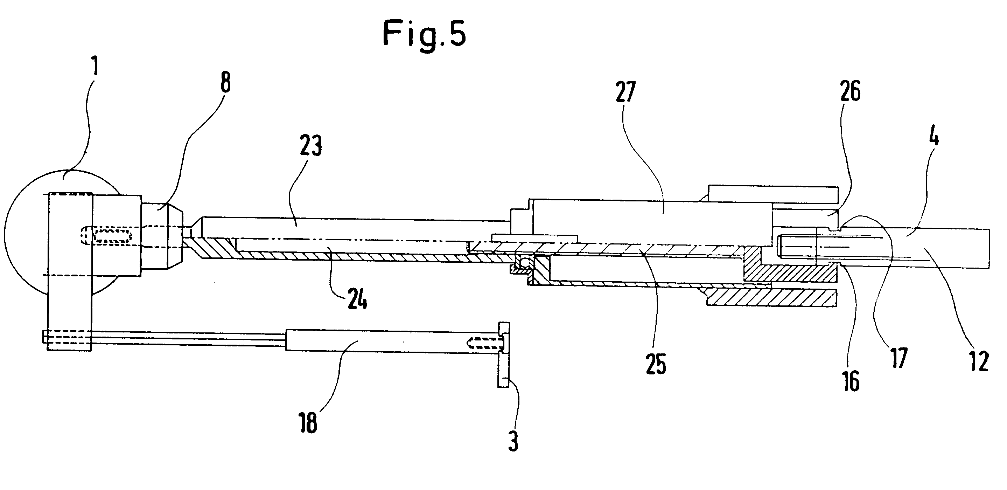

In Figur 5 ist eine Demontagevorrichtung dargestellt, die in ein Spannfutter 8 eingespannt ist. Eine Spindel 23 besitzt ein Innengewinde 24, in das ein Gewindestab 25 eingreift, der mit einem Zugelement 26 starr verbunden ist. Wird die Spindel 23 in Rotation versetzt, so wird dadurch der Gewindestab 25 zusammen mit dem Zugelement 26 axial in Richtung 27 bewegt, wobei der Spreizdübel 4 aus einem hier nicht dargestellten Bohrloch herausgezogen wird.

## Patentansprüche

1. Befestigungssystem mit einem Spreizdübel und einer Montagevorrichtung zum Verankern des Spreizdübels in einem Bohrloch eines Mauerwerks, der aus einem Gewindebolzen mit Spreizkonus und einer Spreizhülse besteht, in die der Spreizkonus beim Spreizvorgang eingezogen wird, **dadurch gekennzeichnet**, daß als Montagevorrichtung ein Schrauber (1) mit einem an ihr befestigten Verdrehsicherungselement (3,30) vorgesehen ist, daß ein am Gewinde des Gewindebolzens (10) aufgeschraubter Mitnehmer (2) in das Spannfutter (8) des Schraubers (1) eingespannt ist, daß das Verdrehsicherungselement (3,30) an der Spreizhülse (12) angreift und diese beim Spreizvorgang gegen Verdrehen sichert, und daß im Spreizdübel (4) zwischen Gewindebolzen (10) und Spreizhülse (12) ein elastisches Element (21) eingesetzt ist, das den Gewindebolzen (10) mit der Spreizhülse (12) reibschlüssig verbindet.

2. Befestigungssystem nach Anspruch 1, **dadurch gekennzeichnet**, daß das Verdrehsicherungselement (3) formschlüssig an der mit Abflachungen (16,17) versehenen Mantelfläche der Spreizhülse (12) angreift.

3. Befestigungssystem nach Anspruch 1, **dadurch gekennzeichnet**, daß das Verdrehsicherungselement (30) an der dem Spreizkörper (11) abgewandten Stirnseite der Spreizhülse (12) mit einer gerändelten oder Kerben aufweisenden Fläche (32) angreift.

4. Befestigungssystem nach Anspruch 3, **dadurch gekennzeichnet**, daß das Verdrehsicherungselement (30) zwischen Spreizhülse (12) und Mitnehmer (2) eingespannt ist.

5. Befestigungssystem nach einem der vorhergehenden Ansprüche, **dadurch gekennzeichnet**, daß das Verdrehsicherungselement (3,30) über einen Haltestab (18) am Schraubergehäuse (19) eingespannt ist.

6. Befestigungssystem nach Anspruch 5, **dadurch gekennzeichnet**, daß das Verdrehsicherungselement (3,30) in die für den als Tiefenanschlag vorgesehene Aufnahme eingespannt ist.

7. Befestigungssystem mit einem Spreizdübel und einer Demontagevorrichtung zum Herausziehen eines in ein Bohrloch eines Mauerwerks eingesetzten Spreizdübels, **dadurch gekennzeichnet**, daß durch Drehung einer Spindel (23), die an einem Ende in ein Spannfutter (8) eingespannt ist, ein an der Spreizhülse (12) formschlüssig ansetzbares Zugelement (26) axial (27) bewegt wird.

## Claims

1. Fixing system with an expansible plug and an installation device for anchoring the expansible plug in a hole bored in masonry, which plug consists of a threaded bolt with expander cone, and an expansible sleeve, into which the expander cone is drawn during the expansion process, characterized in that as installation device there is provided a screw driver (1) with an anti-rotation element (3, 30) attached thereto, that a driving member (2) screwed onto the thread of the threaded bolt (10) is clamped in the chuck (8) of the screw driver (1), that the anti-rotation element (3, 30) engages the expansible sleeve (12) and safeguards this during the expansion process against rotation, and that in the expansible plug (4), between the threaded bolt (10) and the expansible sleeve (12), there is inserted a resilient element (21) which joins the threaded bolt (10) to the expansible sleeve (12) by frictional engagement.

2. Fixing system according to claim 1, characterized in that the anti-rotation element (3) acts with a positive fit on the outer surface of the expansible sleeve (12) provided with grooves (16, 17).

3. Fixing system according to claim 1, characterized in that the anti-rotation element (30) acts on the end face of the expansible sleeve (12) remote from the expander body (11) with a face (32) that is knurled or notched.

4. Fixing system according to claim 3, characterized in that the anti-rotation element (30) is gripped between the expansible sleeve (12) and the driving member (2).

5. Fixing system according to one of the preceding claims, characterized in that the anti-rotation element (3, 30) is clamped by way of a holding rod (18) to the screw driver housing (19).

6. Fixing system according to claim 5, characterized in that the anti-rotation element (3, 30) is clamped in the recess provided as the depth stop.

7. Fixing system with an expansible plug and a dismantling device for pulling out an expansible plug set in a hole bored in masonry, characterized in that by turning a spindle (23) which is gripped at one end in a chuck (8), a pulling element (26) which can be placed with a positive fit on the expansible sleeve (12) is moved axially (27).

## Revendications

1. Montage de fixation à cheville expansible et dispositif de mise en place, destiné à ancrer dans un trou d'un mur cette cheville composée d'un goujon fileté à cône dilateur et d'une douille expansible dans laquelle ce cône est enfoncé pour la dilater, montage caractérisé en ce que le dispositif de mise en place est une visseuse (1) à laquelle un organe (3; 30) d'immobilisation en rotation est fixé ; en ce qu'un organe (2) d'entraînement, vissé sur le filetage du goujon (10), est serré dans le mandrin (8) de la visseuse (1) ; en ce que l'organe (3; 30) d'immobilisation en rotation est en prise avec la douille (12) et empêche celle-ci de tourner pendant qu'elle est dilatée ; et en ce qu'un élément élastique (21), qui relie par friction le goujon (10) et la douille (12), est placé entre eux dans cette cheville expansible (4).

2. Montage de fixation selon la revendication 1, caractérisé en ce que l'organe (3) d'immobilisation en rotation est en prise par conformation avec des méplats (16, 17) formés dans l'enveloppe de la douille (12) expansible.

3. Montage de fixation selon la revendication 1, caractérisé en ce que l'organe (30) d'immobilisation en rotation est en prise, par une surface (32) moletée ou crantée, avec la face d'extrémité de la douille (12) opposée à l'élément dilateur (11).

4. Montage de fixation selon la revendication 3, caractérisé en ce que l'organe (30) d'immobilisation en rotation est serré entre la douille (12) expansible et l'organe (2) d'entraînement.

5. Montage de fixation selon l'une des revendications précédentes, caractérisé en ce que l'organe (3; 30) d'immobilisation en rotation est rendu solidaire par une tige (18) de retenue du boîtier (19) de la visseuse.

6. Montage de fixation selon la revendication 5, caractérisé en ce que l'organe (3; 30) d'immobilisation en rotation est encastré dans le logement destiné à la butée de profondeur.

7. Montage de fixation à cheville expansible et dispositif de démontage destiné à extraire une cheville expansible enfoncée dans un trou d'un mur, caractérisé en ce que, en tournant une broche (23), dont une extrémité est serrée dans un mandrin(8), on fait se déplacer axialement (27) un élément (26) de traction, qui peut être monté sur la douille (12) expansible et en être rendu solidaire par conformation.

# Fig.1

# Fig. 2

Fig.3

Fig.4

## Fig.5

EP 0 372 196 B1